## Europäisches Patentamt

## European Patent Office

## Office européen des brevets

(11) Veröffentlichungsnummer: **0 139 115
B1**

(19)

(12) **EUROPÄISCHE PATENTSCHRIFT**

(45) Veröffentlichungstag der Patentschrift:
**07.10.87**

(51) Int. Cl.⁴: **F 16 H  19/06**

(21) Anmeldenummer: **84108824.8**

(22) Anmeldetag: **25.07.84**

(54) **Gerät zur Überführung einer rotatorischen in eine translatorische Bewegung.**

(30) Priorität: **10.08.83  DE 3328889**

(43) Veröffentlichungstag der Anmeldung:
**02.05.85 Patentblatt 85/18**

(45) Bekanntmachung des Hinweises auf die Patenterteilung:
**07.10.87 Patentblatt 87/41**

(84) Benannte Vertragsstaaten:
**AT BE CH DE FR GB LI NL**

(56) Entgegenhaltungen:
**EP - A - 0 065 231
AT - B - 308 021
CH - A - 397 553
DE - A - 1 947 645
DE - A - 2 030 433
DE - A - 2 519 049
DE - A - 2 938 953
DE - C - 394 039
FR - A - 1 443 627
US - A - 3 772 930**

(73) Patentinhaber: **HÖRMANN KG ANTRIEBS- und
STEUERUNGSTECHNIK, Remser Brook 11 (Ortsteil
Marienfeld), D-4834 Harsewinkel 2 (DE)**

(72) Erfinder: **Hörmann, Michael, Dipl.-Ing., Upheider Weg 94,
D-4803 Steinhagen/Westf. (DE)**

(74) Vertreter: **Flügel, Otto, Dipl.-Ing. et al, Lesser, Flügel &
Säger Patentanwälte Cosimastrasse 81,
D-8000 München 81 (DE)**

## Beschreibung

Die Erfindung betrifft ein Gerät zur Überführung einer rotatorischen in eine translatorische Bewegung und umgekehrt mit den Merkmalen des Oberbegriffes des Anspruches 1.

Bekannt sind z.B. Kurbeltriebe, die in ihrem translatorischen Arbeitsbereich auf den Durchmesser des Kurbelrades beschränkt sind und entsprechenden Platzbedarf aufweisen. Weiterhin sind Schleppkettenantriebe bekannt, die aufgrund der endlos ausgebildeten Kette zwei Umlenkräder erfordern und eine verhältnismässig grosse Masse aufweisen, abgesehen davon, dass die Kettenführung im Bereich der Längstrume Probleme bereiten kann. Bei schliesslich noch bekannten Zahnrad-Zahnstangen-Trieben benötigt die Zahnstange den doppelten Raum in Richtung der Translationsbewegung ihres Abtriebspunktes.

Ein bekanntes Gerät der eingangs genannten Art ist im Rahmen einer Textilmaschine eingesetzt – FR-PS 1.443.627. Dort ist zur Bildung einer fadenführenden «Nadel» ein offenes Band aus Metall oder Kunststoff bereichsweise um ein Antriebsrad geschlungen, mit dem es in Umfangsrichtung formschlüssig in Eingriff gehalten ist. In den Endbereichen der Umschlingungsstrecke ragt das Band tangential von der kreisringförmigen Umfangsfläche des Rades ab und erstreckt sich frei und geradlinig. In diesem abragenden Bereich weist das Band ein gebogenes Querschnittsprofil auf, aus dem es in einem leicht biegsamen Zustand übergeht, wenn es im Umschlingungsbereich flach an dem Antriebsrad anliegt. Diese Krümmungsverformung ¯in Bandlängsrichtung verlangt eine entsprechende elastische Verformbarkeit des Bandes aus dem verwölbten in einen gestreckten Querschnittsverlauf, aus dem das Band bei Ablauf von dem Antriebsrad sich selbsttätig wieder in den verwölbten Zustand zurück begibt, um die erforderliche Formstabilität im geradlinigen, frei abragenden Bereich zu erhalten. Diese geforderte Formstabilität des geradlinig frei abragenden Bandes ist nur unter sehr geringen Druckbelastungen sichergestellt.

Der Erfindung liegt die Aufgabe zugrunde, ein Gerät der eingangs genannten Art zu schaffen, das bei einfacher Ausgestaltung reibungs- und massearm ausgebildet ist.

Ausgehend von einem Gerät mit den Merkmalen des Oberbegriffes des Anspruches 1 wird die Aufgabe erfindungsgemäss durch dessen Kennzeichen gelöst.

Das Band des erfindungsgemäss ausgebildeten Gerätes ist hinsichtlich eines über einen Schlitten an seinem Arbeitsende angeschlossenen Gegenstandes oder Antriebes auf Zug und Druck beanspruchbar, weil das Band über seine jeweilige Längserstreckung zwischen dem Schlitten und dem Drehkörper durchgehend in einer Führung längsverschiebbar gehalten ist. Aufgrund des gewölbten Zustandes des Bandes in diesem Bereich ist dessen Steifigkeit gegen Ausknickung entsprechend hoch, was eine geringe Reibbelastung in der Führung bedingt. Dies ist vor allem bei verhältnismässig langen translatorischen Bewegungen des Bandes von Bedeutung, die unter möglichst gleicher Antriebskraft vonstatten gehen sollen.

In bevorzugter Ausführung ist das Band im Querschnitt kreisbogenförmig verwölbt. Dies bedingt eine entsprechend einfache Herstellung des Bandes und des Führungsprofils. Das Band kann aber auch im Querschnitt unterschiedliche Verwölbungsradien aufweisen, so beispielsweise in der Mitte stärker gekrümmt als in den seitlichen Bereichen zwischen den Rändern und der Mitte. Es ist aber – insbesondere je nach Ausbildung einer in Längsrichtung verlaufenden, formschlüssig mit einer entsprechenden Ausbildung der Bandanlagefläche des Drehkörpers korrespondierenden Eingriffspur – gegebenenfalls auch vorteilhaft, die Verwölbungskrümmung in den Bereichen zwischen den Rändern und der Mitte stärker auszubilden als im Mittelbereich des Bandes. Es kann darüber hinaus je nach Belastung des Bandes von Vorteil sein, dieses im Querschnitt wellenförmig verwölbt auszuformen.

In einer ersten Ausführungsform greift das Band reibschlüssig an der Bandanlagefläche des Drehkörpers an, und zwar über einen mehr oder weniger grossen Umschlingungswinkel. Man kann das Band auch mehrfach bzw. mehrlagig die Bandanlagefläche des Drehkörpers umschlingen lassen.

In einer zweiten Ausführungsform wird zwischen dem Band und dem Drehkörper eine formschlüssige Eingriffsausbildung vorgesehen. Diese Eingriffsausbildung kann grundsätzlich verschiedene Formen aufweisen. So ist es denkbar, in das Band eine in dessen Längsrichtung verlaufende Zahnausprägung einzubringen, die mit einer entsprechenden Zahnausbildung im örtlich zugeordneten Umfangsbereich der Bandanlagefläche des Drehkörpers korrespondiert. Weiterhin sind Ausbiegungen an dem Band denkbar, die in entsprechend geformte Öffnungen in der Bandanlagefläche des Drehkörpers angreifen. Um jedoch Kerbbelastungen und Rissgefahren zu vermeiden, ist die Eingriffsausformung in dem Band als wenigstens eine in Längsrichtung des Bandes verlaufende Reihe gleich beabstandeter kreisrunder Öffnungen ausgebildet, denen entsprechend spur- und abstandsgetreu zylinderförmige Vorsprünge an der Bandanlagefläche des Drehkörpers zugeordnet sind, die in die Öffnungen leicht eingreifen können. Auf diese Weise lassen sich erhebliche Kräfte in das Band einleiten bzw. von diesem auf den Drehkörper übertragen, ohne dass eine störende Reibbelastung im Führungsabschnitt um den Umschlingungsbereich der Bandanlagefläche herum auftritt. Es versteht sich von selbst, dass die Anzahl der Vorsprünge an der Bandanlagefläche des Drehkörpers im Umschlingungsbereich möglichst grösser als eins ist, vorzugsweise ist die Walze über mehrere Vorsprünge gleichzeitig im Eingriff mit den Öffnungen des Bandes.

Das Arbeitsende des Bandes ist an einen Schlitten angeschlossen, der an dem gleichen Führungskörper längsverschiebbar gehalten ist, in dem auch die Führung für das Band ausgebildet ist. Wiederum bevorzugt wird dabei die Befestigung zwischen dem Schlitten und dem Arbeitsende des Bandes unter Zuhilfenahme der im letzteren vorgesehenen Eingriffsausformungen bewerkstelligt. Vorzugsweise wird das dem Arbeitsende abgewandte Bandende ebenfalls in einer Führung verschoben, die parallel zu der Führung des Arbeitsendes verlaufen kann, oder aber in einer Speichertrommel aufgewickelt.

Je nach verwendeten Materialien kann es sinnvoll sein, zwischen die verschiebbar aneinander geführten Teile Gleitkörper oder Gleitbeschichtungen einzusetzen. Bei Anbringung solcher Beschichtungen an dem Band wird man je nach Verlauf der Verwölbung die jeweils aus der Ebene des Bandes vorstehenden Partien mit einer solchen Beschichtung versehen. Diese Partien können auch zu dem Zwecke mit einer Auflage bzw. einer aufgebrachten Schicht, insbesondere aus dehn- und stauchfähigem Werkstoff, versehen sein, um den Durchgriff der Vorsprünge durch die Öffnungen mit einem gewissen Übermass sicherzustellen.

Weitere Ausführungen der Erfindung ergeben sich aus Unteransprüchen in Verbindung mit den in der Zeichnung wiedergegebenen Ausführungsbeispielen, auf die besonders Bezug genommen wird und deren nachfolgende Beschreibung die Erfindung näher erläutert. Es zeigen:

Fig. 1 eine verkürzt wiedergegebene Seitenansicht eines ersten Ausführungsbeispieles;

Fig. 2 einen Schnitt nach der Linie II–II in Fig. 1;

Fig. 3 einen Schnitt nach der Linie III–III in Fig. 1;

Fig. 4 eine verkürzt wiedergegebene Seitenansicht eines zweiten Ausführungsbeispieles;

Fig. 5 einen Schnitt nach der Linie V–V in Fig. 4;

Fig. 6 einen Schnitt nach der Linie VI–VI in Fig. 4;

Fig. 7 eine den Drehkörper umfassende Teildraufsicht eines dritten Ausführungsbeispieles;

Fig. 8 einen Schnitt nach der Linie VIII–VIII in Fig. 7;

Fig. 9 einen Schnitt ähnlich demjenigen nach Fig. 8 in einer anderen Ausführungsform der Eingriffsausbildung;

Fig. 10 eine einen Teil der Führung und einen Schlitten wiedergebende Teilseitenansicht des dritten Ausführungsbeispieles;

Fig. 11 einen Schnitt nach der Linie XI–XI in Fig. 10;

Fig. 12 einen ähnlichen Schnitt wie in Fig.11 durch ein Ausführungsbeispiel mit einer anderen Eingriffsausbildung;

Fig. 13 und 14 Schnitte durch zwei Bänder unterschiedlicher Eingriffsausbildung.

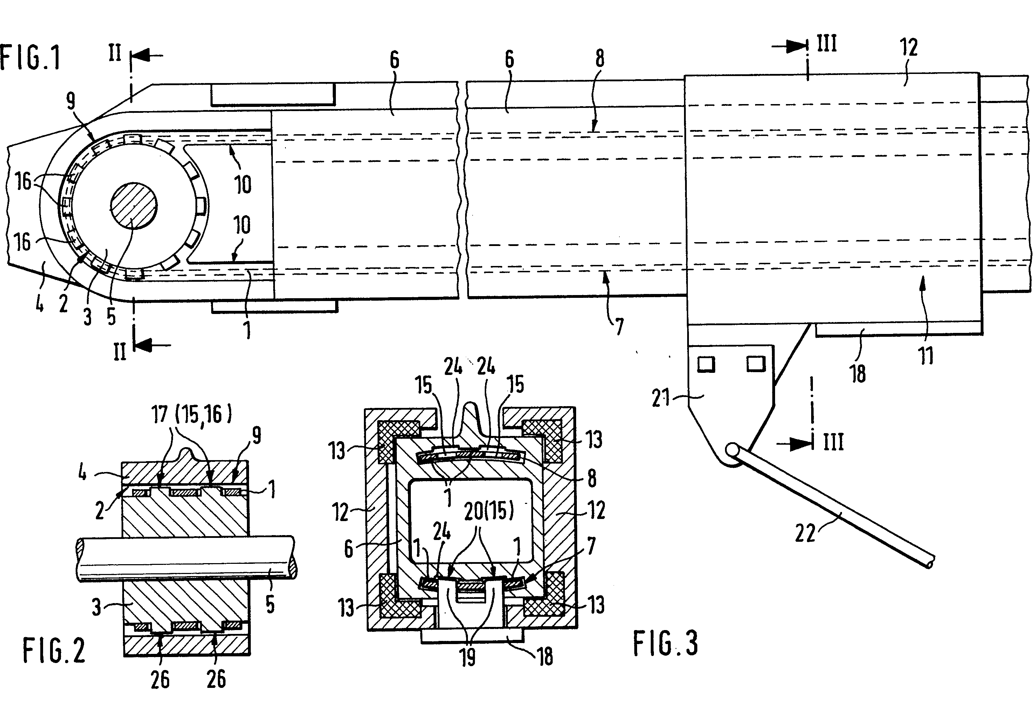

Bei dem Ausführungsbeispiel nach den Fig. 1 bis 3 ist das als Band 1 ausgeführte Bewegungsübertragungsglied mit etwa halbkreisförmigem Umschlingungsbereich um eine Bandanlagefläche 2 herumgeführt, die als zylinderförmiger Mantel eines Drehkörpers 3 ausgebildet ist, der um eine konzentrisch zur Bandanlagefläche 2 verlaufende, hier horizontal in einem Lagerbock 4 gelagerte Achse 5 drehbar ist. An den Lagerbock 4 ist einseitig abstrebend ein Führungskörper 6 angeschlossen, der in zwei überstrebend angeordneten, hinsichtlich der Längs- und Quererstreckung im wesentlichen horizontalen Ebenen zwei Führungen 7 und 8 aufweist, deren jeweils eine tangential auf den Anfang und auf das Ende des Umschlingungsbereiches ausgerichtet ist, d.h. auf den für das Band 1 vorgesehenen Spalt zwischen der Bandanlagefläche 2 im Umschlingungsbereich und der mit konstantem Abstand dazu verlaufenden Führungsfläche eines Führungsabschnittes 9, der in dem Lagerbock 4 ausgebildet ist. Zwischen den Führungen 7 und 8 und dem Anfang und dem Ende des Umschlingungsbereiches sind in dem Lagerbock Führungskanäle 10 für das Band 1 angeordnet.

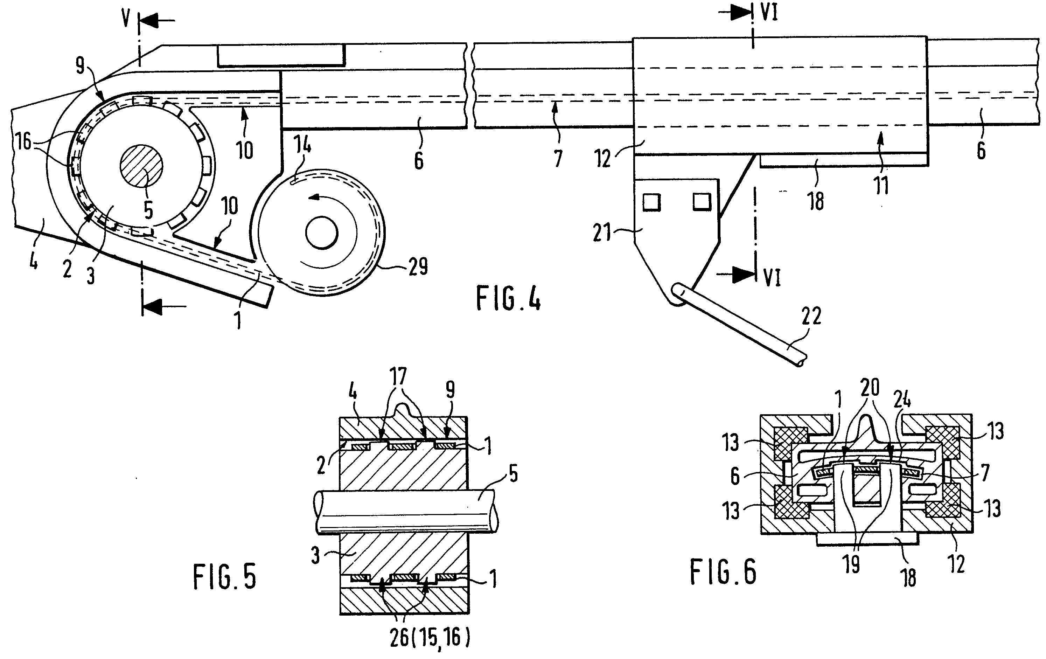

Die in dem Führungskörper 6 ausgebildete untere Führung 7 dient der Aufnahme des Bandabschnittes, der sich jeweils im Arbeitsbereich befindet, d.h. der auf Druck oder Zug belastet ist und ein Arbeitsende 11 aufweist, das sich im Bereich eines Schlittens 12 befindet, der in den Ausseneckbereichen des als viereckiges Hohlprofil ausgebildeten Führungskörpers 6 über in den entsprechenden Eckbereichen des Schlittens angeordnete Gleitkörper 13 geführt ist. Die obere Führung dient als Rückführung 8 für das dem Arbeitsende 11 abgewandte Bandende 14 (Fig. 4 in anderer Rückführung) bzw. den sich jeweils daran anschliessenden Bandbereich.

Das Band ist im Querschnitt kreisbogenförmig verwölbt vorgeformt, weshalb auch die Führung 7 und die Rückführung 8 einen entsprechend geformten Querschnitt aufweisen, wie aus Fig. 3 hervorgeht. Im Umschlingungsbereich liegt das Band dagegen an der kreiszylindrischen bzw. walzenförmigen Bandanlagefläche 2 des Drehkörpers 3 mit gestreckter Querschnittsform an, wie dies Fig. 2 zeigt. Das Band 1 muss also in der Lage sein, sich federelastisch von der verwölbten Querschnittsform in eine gestreckte bzw. ebene oder rechteckförmige Querschnittsform zu verformen und umgekehrt, ohne dass bleibende Verformungen auftreten.

Im vorliegenden Beispiel ist das Band 1 mit zwei symmetrisch zur Bandlängsmitte verlaufenden Reihen von kreisförmigen Öffnungen 15 versehen, die – wie die Querschnitte nach den Fig. 2 und 3 erkennen lassen – auch in Querrichtung fluchtend angeordnet sind. Die beiden Reihen von Öffnungen 15 weisen jeweils denselben Folgeabstand auf, der dem Folgeabstand von Vorsprüngen 16 entspricht, die in zwei entsprechend beabstandeten, in Umfangsrichtung verlaufenden Reihen von der Bandanlagefläche 2 radial vorspringend ausgebildet sind. Der Folgeabstand der Vorsprünge 16 entspricht demjenigen der Öffnungen 15.

Beim Einlaufen in den Umschlingungsbereich greifen die Vorsprünge 16 in die Öffnungen 15 spielbehaftet ein, so dass eine formschlüssige, insgesamt mit 17 bezeichnete Eingriffsausbildung gegeben ist. Dies lässt Fig. 1 und insbesondere Fig. 2 deutlich erkennen.

Der Querschnitt gemäss Fig. 3 durch den Schlitten zeigt das im Querschnitt bogenförmige Band 1 eingelagert in die entsprechende Querschnittsform aufweisenden Führungen 7 und 8. An der Unterseite des Schlittens 12 ist ein Arretierglied 18 vorgesehen, das mit einer insgesamt als Eingriffsgegenausformung 19 bezeichneten Mehrzahl von Eingriffsgliedern, die in der Formgebung den Vorsprüngen 16 entsprechen, in eine entsprechende Anzahl von Öffnungen 15 eingreift, die insgesamt als Eingriffsausformung 20 bezeichnet sind.

Bei den hier wiedergegebenen Ausführungsbeispielen wird davon ausgegangen, dass der Drehkörper 3 mit Hilfe eines Elektromotors angetrieben wird, der in beiden Drehrichtungen betreibbar ist. Der Drehkörper 3 treibt demnach über die Vorsprünge 16, die in die Öffnungen 15 des Bandes 1 eingreifen, das Band entlang der Führungen hin- und hergehend, wodurch das das Arbeitsende 11 aufweisende untere Bandtrum den Schlitten 12 entsprechend entlang seiner Längsverschiebeführung an dem Führungskörper 6 unter Zug- bzw. Druckbeanspruchung des Bandtrumes hin und her bewegt. An dem Schlitten ist eine Konsole 21 befestigt, an der eine Mitnehmerstange 22 für das zu bewegende, nicht dargestellte Objekt angelenkt ist, insbesondere ein Torblatt.

Das zweite Ausführungsbeispiel nach den Fig. 4 bis 6 arbeitet in ähnlicher Weise wie das vorgeschilderte nach den Fig. 1 bis 3, weshalb funktionell zumindest weitgehend übereinstimmende Gegenstände mit denselben Bezugsziffern versehen sind. Abweichend von dem zuerst beschriebe-nen Ausführungsbeispiel beherbergt der Füh-rungskörper 6 nur eine Führung 7 für das Arbeitsende 11 des Bandes 1 bzw. das sich daran jeweils nach Verschiebelage anschliessende Bandtrum. Der Führungskörper und damit der Schlitten nehmen dadurch in der Höhenabmessung einen entsprechend geringeren Raum ein. Die Führung 7 ist auf den oberen Führungskanal 10 des Lagerbokkes 4 ausgerichtet, so dass der untere Führungskanal 10 in den freien Raum unterhalb des Führungskörpers mündet. Der untere Führungskanal 10 ist leicht nach unten abfallend ausgebildet, so dass sich ein Umschlingungsbereich von etwas weniger als 180° ergibt. Dieser Formgebung entsprechend ist der Führungsabschnitt 9 des Lagerbockes 4 im unteren Bereich etwas kürzer ausgebildet. Auf den Ausgang des unteren Führungskanales 10 ist der Eingang einer Speichertrommel 29 ausgerichtet, in welche das rückgeführte Bandtrum mit dem dem Arbeitsende 11 abgewandten Bandende 14 des Bandes 1 eingeschoben wird. In dieser Speichertrommel kann somit das Band 1 spiralförmig auf- und abgewickelt werden. Es ist auch denkbar, die Achse der Speichertrommel 29 in Bildebene gesehen etwas schräg verlaufend anzuordnen und gegebenenfalls die Speichertrommel anzutreiben, so dass das Band 1 inner-halb der Trommel schraubenlinienförmig aufge-nommen wird.

Fig. 5 lässt erkennen, dass der Umschlingungsbereich im unteren Ausgang bereits beendet ist. Die Schnittdarstellung in Fig. 6 lässt erkennen, dass die Eingriffsausformung 20 des Arretiergliedes 18 des Schlittens 12 die Öffnungen 15 des Bandes 1 mit einem gewissen Überstand durchgreift, der dadurch ermöglicht wird, dass in der Führungswandung, die dem Aussenbogen bzw. der konvex verformten Breitseite des Bandes gegenüberliegt, in Längsrichtung des Bandes verlaufende Vertiefungen 24 ausgebildet sind. Wie auch beim zuerst geschilderten Ausführungsbeispiel gezeigt, können solche Vertiefungen 24 auch in der entsprechenden Wandung der Rückführung 8 vorgesehen sein. Dadurch erreicht man, dass das Band in den längslaufenden Bereichen, in denen sich die beiden Reihen der Öffnungen 15 erstrekken, nicht an der Führungswandung angreift. Die Führung beschränkt sich somit auf die in Längs-richtung durchgehenden Materialzonen zumin-dest dieser Seite des Bandes 1.

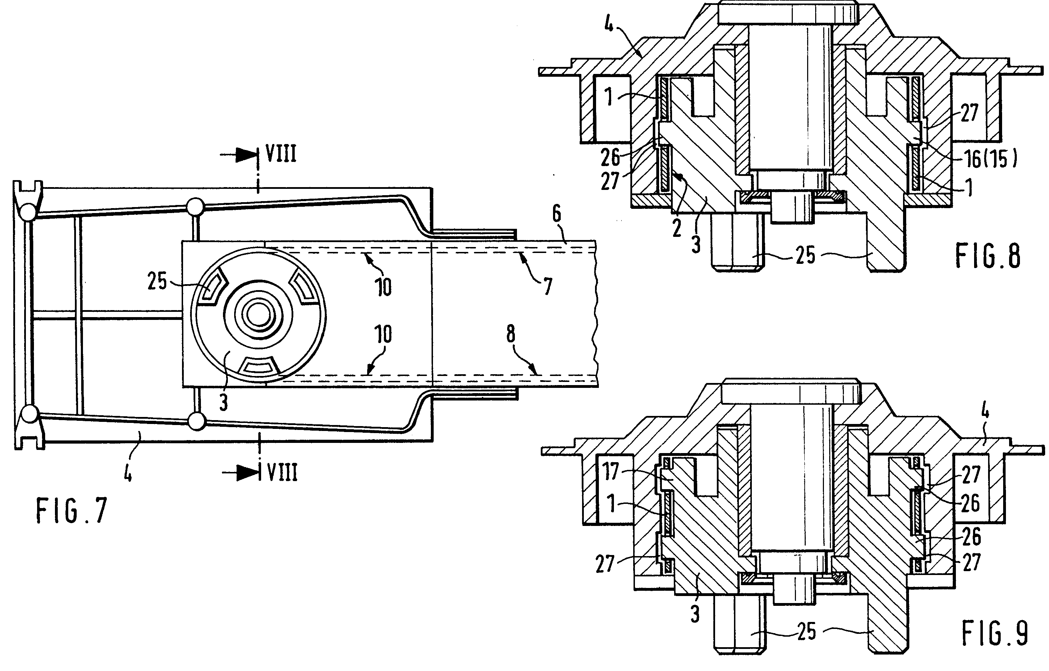

Das in den Fig. 7 bis 14 wiedergegebene dritte Ausführungsbeispiel zeigt hinsichtlich von Ausgestaltungen verschiedene Möglichkeiten auf. Da auch hier wieder weitgehend gleich funktionierende Teile wie bei den übrigen Ausführungsbeispielen vorhanden sind, werden entsprechend dieselben Bezugsziffern verwandt.

In Fig. 7 ist in Draufsicht der mit Anschlussausbildungen 25 für den Anbau eines Motors bzw. eines Getriebes versehene Drehkörper 3 mit seinem Lagerbock 4 wiedergegeben, an dem der gezeichnete Anfangsbereich des Führungskörpers 6 in fluchtender Ausrichtung der in ihm vorgesehenen Führungen 7 und 8 auf je einen der Führungskanäle 10 des Lagerbockes festgelegt ist.

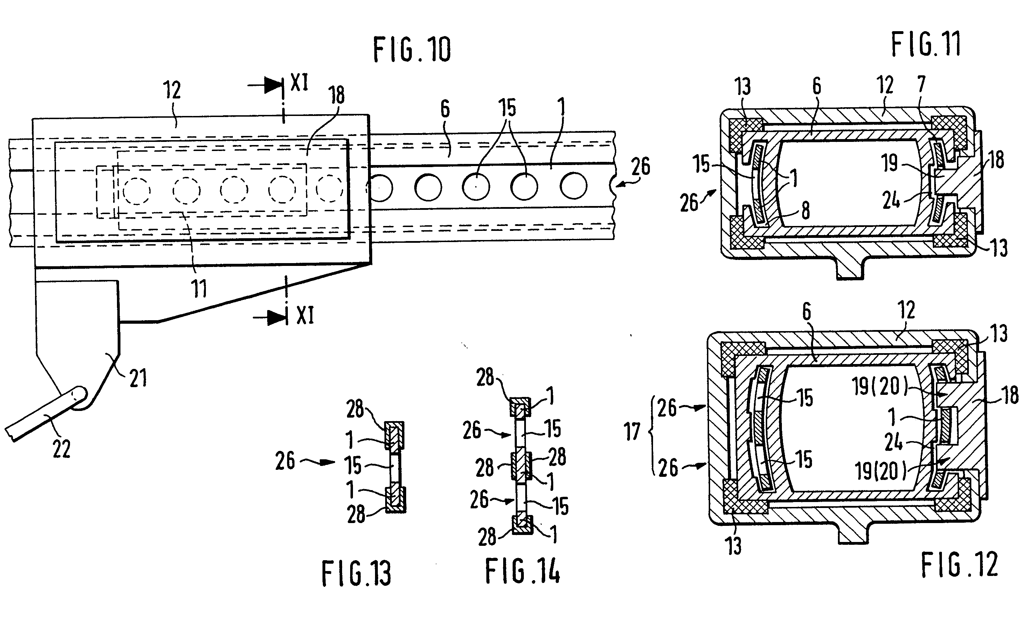

Den in Fig. 7 in Draufsicht wiedergegebenen rotatorischen Antriebsteil kann man dem Führungsteil gemäss Fig. 10 zuordnen, in dem man ihn um die Führungslängsachse um 90° dreht und seitenverkehrt angeschlossen denkt. Die Schnittdarstellung gemäss Fig. 8 zeigt die dann zutreffende Achsausrichtung des Drehkörpers 3 mit Lagerbock 4 und in den Umschlingungsbereich aufgenommenem Band 1.

In der Bauart nach den Fig. 8, 10, 11 und 13 ist das Band nur mit einer Eingriffsspur 26 von gleich beabstandet hintereinander folgenden Öffnungen 15 versehen, die in der Bandlängsmitte angeordnet sind. Folgerichtig ist auch nur ein im axialen Mittelbereich der Bandanlagefläche 2 des Drehkörpers 3 in Umfangsrichtung verlaufender Ring von radial abstehenden Vorsprüngen 16 vorgesehen, der in die Öffnungen 15 des Bandes 1 eingreift.

Um einen überstehenden Durchgriff der Vorsprünge 16 durch die Öffnungen 15 des Bandes 1 zu gewährleisten, ohne dass die Beabstandung der Vorsprünge 16 von der Führungsfläche des Führungsabschnittes 9 zu oder doch unnötig eng wird, ist diese Führungsfläche gegenüber den Stirnseiten der Vorsprünge 16 mit einer umlaufend geführten Vertiefung 27 versehen, die insoweit dieselbe Aufgabe hat wie die Vertiefungen 24 im Bereich der Eingriffsgegenausformung 19 des Arretiergliedes 18 nach den Darlegungen zu Fig. 6.

Fig. 9 zeigt einen der Fig. 8 entsprechend gelegten Schnitt durch eine dadurch etwas andere Bauart, als – wie bereits im Zusammenhang mit den Fig. 1 bis 6 beschrieben – zwei Eingriffsspuren 26 aus zwei parallelen Reihen von Öffnungen 15 und Vorsprüngen 16 vorgesehen sind. Auch hier sind die im Zusammenhang mit Fig. 27 erläuterten Vertiefungen 27 jeweils den Vorsprüngen 16 gegenüber vorgesehen.

Fig. 10 zeigt einen Abschnitt des Führungskörpers 6 mit Schlitten 12, wie er im Zusammenhang mit dem Antriebsteil nach den Fig. 7 und 8 Verwendung finden kann. Das Band 1 ist mit einer in seiner Längsmitte verlaufenden Reihe von Öffnungen 15 versehen, die somit eine Eingriffsspur 26 bilden. Das Arretierglied 18 durchgreift mit Eingriffsgegenausformung 19 entsprechender Ausbildung eine Anzahl der Öffnungen 15 im Bereich des Arbeitsendes 11 des Bandes 1. Wie insbesondere auch Fig. 11 erkennen lässt, weist die Eingriffsgegenausformung 19 bei diesem Eingriff ebenfalls nur eine Reihe von vorsprungsähnlichen Ausbildungen auf, die in die Öffnungen 15 des Bandes 1 eingreifen. Auch bei diesem Ausführungsbeispiel ist eine in Führungslängsrichtung verlaufende Vertiefung 24 vorgesehen, um einen entsprechend überstehenden und damit sicheren Durchgriff der Eingriffsgegenausformung durch die Öffnungen 15 bzw. Eingriffsausformung 20 zu ermöglichen.

Wie Fig. 11 weiter erkennen lässt, ist im übrigen die der konvex verwölbten Breitseite des Bandes 1 gegenüberliegende Führungsfläche der Führungen 7 und 8 auf die Randbereiche des Bandes beschränkt, so dass oberhalb der Öffnungen 15 keine Führung stattfindet.

Der Schnitt nach Fig. 12 entspricht dem Schnitt gemäss Fig. 11 durch den Führungsbereich mit Schlitten der Fig. 10. Wie im Falle der Fig. 9 ist hier die Ausbildung der Führung und die des Arretiergliedes 18 an eine Eingriffsausbildung 17 mit zwei Eingriffsspuren 26 aus zwei parallelen Reihen von kreisförmigen Öffnungen 15 angepasst ausgebildet.

Im Gegensatz zu den ersten beiden Ausführungsbeispielen ist bei dem zuletzt abgehandelten Ausführungsbeispiel das Band in der Führung hochkant gehalten. Dies kann räumlichen Besonderheiten dienen. Durch das erhöhte Widerstandsmoment des aufrecht gerichteten Querschnittsverlaufes kann gegebenenfalls die Reibung herabgesetzt werden.

Die Fig. 13 und 14 zeigen – gestreckt wiedergegebene, beispielsweise so im Umschlingungsbereich der Bandanlagefläche 2 in Erscheinung tretende – Querschnitte durch ein Band 1 in der Ausgestaltung mit einer einzigen Eingriffsspur 26 aus in der Längsmitte angeordneten Öffnungen 15 bzw. ein mit zwei Eingriffsspuren 26 ausgestaltetes Band 1 mit entsprechend zwei parallelen, symmetrisch von der Mitte seitlich angeordneten Reihen von Öffnungen 15.

Bei diesen Bändern 1 sind jeweils die Randbereiche von einer Beschichtung 28 bzw. Umhüllung umfasst. Bei der Bandausbildung gemäss Fig. 14 ist zusätzlich der Mittelsteg zwischen den beiden Reihen von Öffnungen 15 beidseitig mit einer solchen Beschichtung 28 versehen. Diese Massnahme kann zweierlei Zwecken dienen: Zum einen kann mit Hinblick auf den Reibwiderstand das aus Stahl gefertigte Band nicht mit dem Werkstoff des Führungskörpers harmonisieren oder zu starker einseitiger Verschleiss zu befürchten sein. Dann ist es angebracht, eine Beschichtung aus einem Werkstoff zu wählen, die die Gleiteigenschaften verbessert bzw. den Abrieb zumindest weitgehend verhindert. Zum anderen können Umhüllungen bzw. Beschichtungen 28 bewirken, dass ein überstehender Durchgriff der Vorsprünge 16 des Drehkörpers 3 bzw. der Eingriffsgegenausformung 19 des Arretiergliedes 18 durch die Öffnungen 15 sichergestellt wird, ohne dass die Vertiefungen 27 in der Führungsfläche des Führungsabschnittes 9 bzw. die Vertiefungen 24 in den Führungswandungen vorgesehen sein müssen.

Aufgrund der im Umschlingungsbereich notwendigen Verformung des Bandes aus seiner Längsrichtung heraus sollen diese Beschichtungen bzw. Umhüllungen entsprechend dehn- und stauchfähig sein.

Die vorstehenden Ausführungen lassen erkennen, dass das derart ausgestaltete Gerät einfach auszubilden und bei kleiner Antriebsabmessung für grosse Verschiebestrecken geeignet ist, wobei die Bewegungsvorgänge reibungs- und geräuscharm vor sich gehen.

**Patentansprüche**

1. Gerät zur Überführung einer rotatorischen in eine translatorische Bewegung und umgekehrt mit einem um eine Achse (5) umlaufend geführten Drehkörper (3), der wenigstens bereichsweise von einem offenen Band (1) aus Stahl oder einem ähnlich federelastischen Werkstoff umschlungen ist, das im Umschlingungsbereich geführt (9) ist, im Querschnitt verwölbt vorgeformt ausgebildet ist und sich bei Auflaufen in den Umschlingungsbereich der etwa kreiszylinderischen Bandanlagefläche (2) des Drehkörpers (3) aus dem verwölbten in einen gestreckten Querschnittsverlauf verformt und sich bei Verlassen der Bandanlagefläche (2) ohne bleibende Verformung in den gewölbten Querschnittsverlauf zurückverformt, dadurch gekennzeichnet, dass das eine Ende (11) des Bandes (1) mit einem längsverschiebbar an einem Führungskörper (6) gelagerten Schlitten (12) für Zug- und Druckkräfte übertragenden Anschluss an einen Gegenstand oder Antrieb, insbesondere ein Tür- oder ein Torblatt, verbunden ist und dass das Band über die gesamte Längsverschiebestrecke hinweg zwischen dem Drehkörper (3) und dem Schlitten (12) Zug- und Druckkräfte übertragend in einer Führung (7) des Führungskörpers (6) längsverschiebbar gehalten ist.

2. Gerät nach Anspruch 1, dadurch gekennzeichnet, dass das Band (1) im Querschnitt kreisbogenförmig verwölbt vorgeformt ist.

3. Gerät nach Anspruch 1, dadurch gekennzeichnet, dass das Band im Querschnitt unterschiedliche Verwölbungsradien aufweist.

4. Gerät nach Anspruch 1, dadurch gekennzeichnet, dass das Band im Querschnitt wellenförmig verwölbt vorgeformt ist.

5. Gerät nach einem der Ansprüche 1 bis 4, dadurch gekennzeichnet, dass zwischen dem Band (1) und dem Drehkörper (3) eine formschlüssige Eingriffsausbildung (17) vorgesehen ist.

6. Gerät nach Anspruch 5, dadurch gekennzeichnet, dass die Eingriffsausbildung (17) durch an der Bandanlagefläche (2) des Drehkörpers (3) ausgebildete Vorsprünge (16) und korrespondierend dazu in dem Band (1) vorgesehene Öffnungen (15) gebildet ist.

7. Gerät nach Anspruch 6, dadurch gekennzeichnet, dass die Öffnungen (15) kreisflächenförmig ausgebildet und die Vorsprünge (16) radial ausgeformte Kreiszylinder mit entsprechend geringerem Durchmesser sind.

8. Gerät nach einem der Ansprüche 5 bis 7, dadurch gekennzeichnet, dass die bandseitigen Mittel der Eingriffsausbildung als Eingriffsausformung (20) zugleich der Befestigung an dem Schlitten (12) dienen, an welchem eine entsprechende Eingriffsgegenausformung (19) eines Arretiergliedes (18) angeordnet ist.

9. Gerät nach einem der Ansprüche 5 bis 8, dadurch gekennzeichnet, dass die Eingriffsausbildung (17) eine – insbesondere mittige – oder mehrere parallele in Längsrichtung des Bandes (1) bzw. in Umfangsrichtung der Bandanlagefläche (2) verlaufende Eingriffsspuren (26) aufweist.

10. Gerät nach einem der Ansprüche 1 bis 9, dadurch gekennzeichnet, dass die Achse (5) des Drehkörpers (3) etwa horizontal verlaufend angeordnet ist und sich das Band (1) in der Führung (7) mit seinen Breitseiten in die Vertikale weisend bewegt oder umgekehrt die Achse (5) vertikal verlaufend angeordnet ist und das Band mit seinen Breitseiten in eine Horizontalebene weist.

11. Gerät nach einem der Ansprüche 1 bis 10, dadurch gekennzeichnet, dass das andere Ende (14) des Bandes (1) in einer Rückführung (8) gehalten ist, die insbesondere parallel zu der Führung (7) des Arbeitsendes (11) verläuft.

12. Gerät nach einem der Ansprüche 1 bis 10, dadurch gekennzeichnet, dass das andere Ende (14) des Bandes (1) in einer Speichertrommel (29) im Zuge der Verschiebebewegung spiralig umlaufend geführt ist.

13. Gerät nach einem der Ansprüche 1 bis 12, dadurch gekennzeichnet, dass der Führungskörper (6) und/oder der Schlitten (12) und/oder der Drehkörper (3) bzw. dessen Lagerbock (4) als Spritzgussteile, insbesondere unter Verwendung von Aluminium und/oder Zink, ausgebildet sind.

14. Gerät nach einem der Ansprüche 1 bis 13, dadurch gekennzeichnet, dass der Schlitten (12) über Gleitkörper (13) an dem Führungskörper (6) gelagert ist.

15. Gerät nach einem der Ansprüche 1 bis 14, dadurch gekennzeichnet, dass das Band (1), insbesondere in seinen Randbereichen und/oder seinem Mittelbereich, vorzugsweise beidseitig, mit einer Gleit- bzw. Abstandsbeschichtung (28) versehen ist.

16. Gerät nach einem der Ansprüche 1 bis 15, dadurch gekennzeichnet, dass in der Führungswandung der Führung (7) bzw. des Führungsabschnittes (9) gegenüber der Eingriffsausformung (19) des Arretiergliedes (18) bzw. der Vorsprünge (16) des Drehkörpers (3) in der jeweiligen Bewegungsrichtung durchgehend ausgeformte Vertiefungen (24, 27) angeordnet sind.

17. Gerät nach einem der Ansprüche 1 bis 4 und 10 bis 16, dadurch gekennzeichnet, dass der kraftübertragende Eingriff zwischen dem Band und dem Drehkörper über Reibschluss erfolgt.

## Claims

1. A device for converting a rotational movement into a translational one and vice versa having a rotary member (3) which is guided for rotation about a spindle (5) and which is wrapped round, at least partially, by an open belt (1) of steel or a similar springy material which is guided in the wrap-round region (9), is made preshaped curved in cross-section and, on running into the wrapround region of the substantially circular cylindrical belt contact surface (2) of the rotary member (3) is deformed out of the curved into a flat crosssectional course and, on leaving the belt contact surface (2) is deformed back into the curved crosssectional course without permanent deformation, characterised in that one end (11) of the belt (1) is connected to a carriage (12) which is mounted for longitudinal displacement on a guide member (6) for connection, in a manner transmitting tensile and compressive forces, to an object or a drive, particularly a door or a gate leaf, and that the belt is held for longitudinal displacement in a guide (7) of the guide member (6) in a manner transmitting tensile and compressive forces, over the whole longitudinal displacement distance between the rotary member (3) and the carriage (12).

2. A device as claimed in Claim 1, characterised in that the belt (2) is preshaped curved arcuately in cross-section.

3. A device as claimed in Claim 1, characterised in that the belt has different radii of curvature in cross-section.

4. A device as claimed in Claim 1, characterised in that the belt is preshaped curved in an undulating manner in cross-section.

5. A device as claimed in any one of Claims 1 to 4, characterised in that a positive engagement formation (17) is provided between the belt (1) and the rotary member (3).

6. A device as claimed in Claim 5, characterised in that the engagement formation (17) is formed by projections (16) formed on the belt contact surface (2) of the rotary member (3) and openings (15) corresponding thereto provided in the belt (1).

7. A device as claimed in Claim 6, characterised in that the openings (15) are circular in area and the projections are radically shaped circular cylinders with a correspondingly smaller diameter.

8. A device as claimed in any one of Claims 5 to 7, characterised in that the means of the engagement formation at the belt side serve simultaneously as an engagement shaping (20) and for the securing to the carriage (12) on which a corresponding engagement counter shaping (19) of a locking member (18) is provided.

9. A device as claimed in any one of Claims 5 to 8, characterised in that the engagement formation (17) comprises one – particularly central – or a plurality of engagement tracks (26) extending parallel in the longitudinal direction of the belt (1) or in the peripheral direction of the belt contact surface (2).

10. A device as claimed in any one of Claims 1 to 9, characterised in that the spindle (5) of the rotary member (3) is arranged to extend substantially horizontally and the belt (1) moves in the guide (7) with its broad sides facing vertically or conversely the spindle (5) is arranged extending vertically and the belt faces with its broad sides in a horizontal plane.

11. A device as claimed in any one of Claims 1 to 10, characterised in that the other end (14) of the belt (1) is held in a return guide (8) which extends, in particular, parallel to the guide (7) of the working end (11).

12. A device as claimed in any one of Claims 1 to 10, characterised in that the other end (14) of the belt (1) is guided in a storage drum (29) for rotation spirally in the course of the displacement movement.

13. A device as claimed in any one of Claims 1 to 12, characterised in that the guide member (6) and/or the carriage (12) and/or the rotary member (3) or its bearing block (4) are constructed in the form of die-cast parts, particularly using aluminium and/or zinc.

14. A device as claimed in any one of Claims 1 to 13, characterised in that the carriage (12) is mounted on the guide member (6) by means of sliding members (13).

15. A device as claimed in any one of Claims 1 to 14, characterised in that the belt (1) is provided with a sliding or spacing coating (28), particularly in its marginal regions and/or its middle region, preferably at both sides.

16. A device as claimed in any one of Claims 1 to 15, characterised in that recesses (24, 27) formed continuously in the particular direction of movement are provided in the guiding wall of the guide (7) or of the guide portion (9) opposite the engagement shaping (19) of the locking member (18) or the projections (16) of the rotary member (3).

17. A device as claimed in any one of Claims 1 to 4 and 10 to 16, characterised in that the power-transmitting engagement between the belt and the rotary member is effected through frictional connection.

**Revendications**

1. Instrument pour transformer un mouvement de rotation en un mouvement de translation et inversement, comportant un corps de rotation (3) qui peut tourner autour d'un axe (5) et qui est enveloppé, au moins dans une de ses zones, d'une bande ouverte (1), en acier ou en matériau d'élasticité similaire, qui passe dans la zone d'enroulement (9), ladite bande (1) ayant une section de forme cintrée qui se transforme en une forme étirée lorsqu'elle atteint ladite zone d'enroulement (9) de la surface d'application (2), sensiblement cylindrique, du corps de rotation (3), et qui reprend sa forme cintrée, sans déformation résiduelle, lorsqu'elle quitte ladite surface d'application (2), caractérisé par le fait que l'une des extrémités (11) de la bande (1) est reliée à un traîneau qui peut être déplacé longitudinalement en s'appuyant sur un corps de guidage (6) en vue de transmettre des forces de traction ou de pression à un objet ou à un entraînement, en particulier à un vantail de porte, et par le fait que la bande est maintenue de manière à pouvoir être déplacée longitudinalement dans un guidage (7) du corps de guidage (6), de façon à transmettre des forces de traction et de pression entre le corps de rotation (3) et le traîneau (12) sur la totalité du trajet de son déplacement longitudinal.

2. Instrument conforme à la revendication 1, caractérisé par le fait que la bande (1) a une section transversale en forme d'arc de cercle obtenu par précintrage.

3. Instrument selon la revendication 1, caractérisé par le fait que la section de la bande présente des rayons de cintrage différents.

4. Instrument selon la revendication 1, caractérisé par le fait que la section de la bande a subi un précintrage de forme ondulée.

5. Instrument selon l'une des revendications 1 à 4, caractérisé par le fait qu'entre la bande (1) et le corps de rotation (3) est prévu un encastrement (17).

6. Instrument selon la revendication 5, caractérisé par le fait que l'encastrement (17) est constitué par des saillies (16) formées sur la surface d'application de la bande (2) du corps de rotation (3) et des orifices (15) qui leur correspondent prévus dans la bande (1).

7. Instrument selon la revendication 6, caractérisé par le fait que les orifices (15) ont une surface circulaire et que les saillies (16) sont des cylindres se projetant radialement et dont le diamètre est plus faible de manière à correspondre à celui des orifices (15).

8. Instrument selon l'une des revendications 5 à 7, caractérisé par le fait que les moyens d'encastrement placés du côté de la bande servent en même temps, sous la forme de l'encastrement (20), à la fixation, sur le traîneau (12) sur lequel est disposé un encastrement correspondant (19), d'un organe de blocage (18).

9. Instrument selon l'une des revendications 5 à 8, caractérisé par le fait que l'encastrement (17) présente une trace d'encastrement (26), placé au centre, ou bien plusieurs traces d'encastrement (26) parallèles s'étendant dans le sens longitudinal de la bande (1) ou dans le sens périphérique de la surface d'application (2) de la bande.

10. Instrument selon l'une des revendications 1 à 9, caractérisé par le fait que l'axe (5) du corps de rotation (3) est disposé de manière à s'étendre sensiblement horizontalement et que la bande (1) se déplace dans le guidage (7) en direction verticale ou inversement, que l'axe (5) est disposé de manière à s'étendre verticalement et que la bande se déplace dans un plan horizontal.

11. Instrument selon l'une des revendications 1 à 10, caractérisé par le fait que l'autre extrémité (14) de la bande (1) est maintenue dans un guidage de retour (8) qui est dirigé parallèlement au guidage (7) de l'extrémité (11).

12. Instrument selon l'une des revendications 1 à 10, caractérisé par le fait que l'autre extrémité (14) de la bande (1), pendant le mouvement de déplacement, passe à l'intérieur d'un tambour d'accumulation (29) en un mouvement rotatif spiralé.

13. Instrument selon l'une des revendications 1 à 12, caractérisé par le fait que le corps de guidage (6) et/ou le traîneau (12) et/ou le corps de rotation (3) ou son coussinet (4) sont réalisés par moulage à injection, en particulier en utilisant de l'aluminium et/ou du zinc.

14. Instrument selon l'une des revendications 1 à 13, caractérisé par le fait que le traîneau (12) s'appuie sur le corps de guidage (6) par l'intermédiaire de corps coulissants (13).

15. Instrument selon l'une des revendications 1 à 14, caractérisé par le fait que la bande (1), en particulier dans ses zones marginales et/ou sa zone centrale, et de préférence sur les deux côtés, est munie d'un enduit (28) assurant le coulissement ou l'écartement.

16. Instrument selon l'une des revendications 1 à 15, caractérisé par le fait que, dans la paroi de guidage (7) ou de la section de guidage (9) sont prévus, en face de l'encastrement (19) de l'organe de blocage (18) ou des saillies (16) du corps de rotation (3), des évidements (24, 27) réalisés de manière passante dans la direction respective du mouvement.

17. Instrument selon l'une des revendications 1 à 4 et 10 à 16, caractérisé par le fait que la prise permettant la transmission des forces entre la bande et le corps de rotation s'effectue par friction.

FIG.1

FIG.2

FIG.3

0 139 115

FIG.4

FIG.5

FIG.6

FIG.8

FIG.9

FIG.7

FIG.10

FIG.11

FIG.12

FIG.13

FIG.14